# FASCICULE DE BREVET EUROPEEN

(11) **EP 2 512 927 B1**
(45) Date de publication et mention de la délivrance du brevet: **11.02.2015**
(21) Numéro de dépôt: 10809007.7
(22) Date de dépôt: 14.12.2010
(51) Int. Cl.: B64D 33/02, F02C 7/047

(54) **ENTREE D'AIR D'UNE NACELLE D'AERONEF INTEGRANT DES MOYENS D'INJECTION EN AIR CHAUD POUR LE TRAITEMENT DU GIVRE OPTIMISES**
TRIEBWERKSGONDELLUFTEINLASS EINES FLUGZEUGS MIT EINER VORRICHTUNG ZUR HEISSLUFTEINSPRITZUNG ZUR OPTIMIERTEN ENTEISUNGSBEHANDLUNG
AIR INLET OF AN AIRCRAFT NACELLE COMPRISING HOT AIR INJECTION MEANS FOR OPTIMISED DEICING TREATMENT

(30) Priorité: 18.12.2009 FR 0959162
(43) Date de publication de la demande: 24.10.2012
(73) Titulaire: Airbus Opérations SAS, 31060 Toulouse (FR)
(72) Inventeur: PORTE, Alain, F-31770 Colomiers (FR); HORMIERE, Arnaud, F-31100 Toulouse (FR); DEGA, Alain, F-31140 Montberon (FR)
(74) Mandataire: Fantin, Laurent
(86) Numéro de dépôt international: PCT/FR2010/052710
(87) Numéro de publication internationale: WO 2011/073565

(56) Documents cités:
- EP-A2- 0 376 371
- US-A- 4 688 745
- US-A1- 2002 148 929
- US-B1- 6 267 328
- US-B1- 6 443 395

## Description

La présente invention se rapporte à une entrée d'air d'une nacelle d'aéronef intégrant des moyens d'injection en air chaud optimisés pour le traitement du givre.

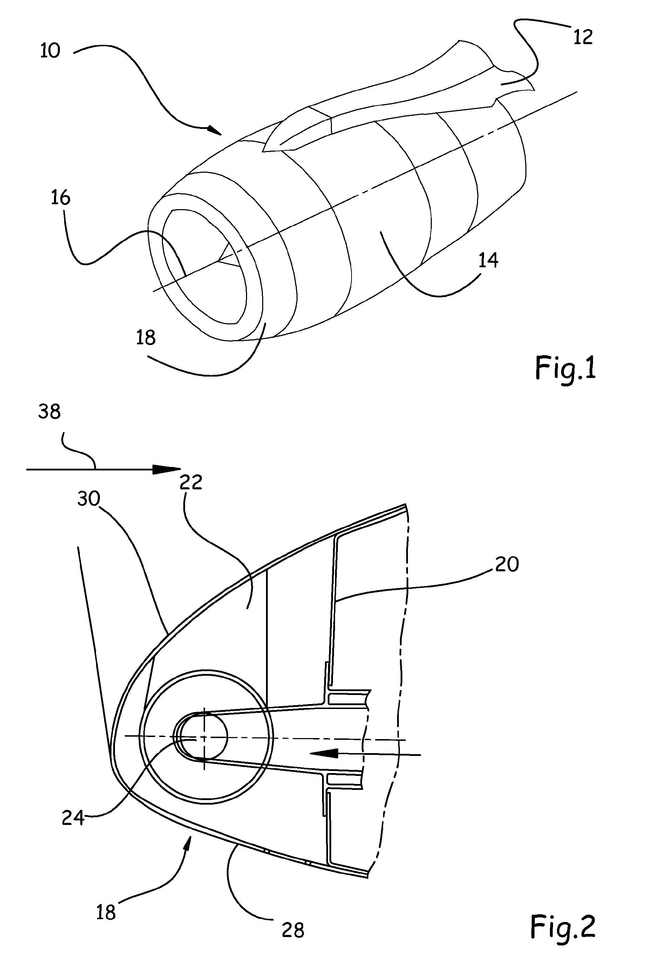

De manière connue, comme illustré sur la figure 1, un ensemble propulsif 10 d'un aéronef, par exemple relié sous la voilure par l'intermédiaire d'un mât 12, comprend une nacelle 14 dans laquelle est disposée de manière sensiblement concentrique une motorisation. L'axe longitudinal de la nacelle est référencé 16. La nacelle 14 comprend une paroi intérieure délimitant un conduit avec une entrée d'air 18 à l'avant permettant de canaliser l'air en direction de la motorisation.

La présente invention se rapporte plus particulièrement à une nacelle intégrant un procédé de traitement du givre utilisant de l'air chaud en contact avec la paroi interne de l'entrée d'air 18, notamment de l'air chaud prélevé au niveau du moteur.

Selon un mode de réalisation connu d'après les documents FR-2.813.581 et US-6.443.395, illustré sur les figures 2 et 3A et 3B, une nacelle 14 comprend à l'intérieur une cloison appelée cadre avant 20 qui délimite avec l'entrée d'air 18 un conduit 22 qui s'étend sur toute la circonférence de la nacelle et qui a une section en forme sensiblement de D dans lequel circule de l'air chaud.

Ce conduit 22 est alimenté en air chaud par des moyens 24 d'injection.

L'air chaud injecté parcourt le conduit 22 sur 360° avant d'être rejeté. De par un effet centrifuge, l'air chaud vient à circuler davantage sur le côté extérieur de l'entrée d'air référencé 28 sur la figure 2.

Si on dispose les moyens 24 d'injection de l'air chaud au point le plus bas de la nacelle, la capacité de dégivrage n'est pas homogène sur la circonférence. Elle augmente rapidement pour obtenir une valeur maximale puis diminue progressivement sur le reste de la circonférence avec une discontinuité du traitement du givre au niveau le plus bas.

En raison de l'effet centrifuge et/ou de l'aspect non homogène de la température sur la circonférence, la température au niveau du côté intérieur 30 de l'entrée d'air peut ne pas être suffisante.

Pour pallier à cette éventuelle insuffisance, on peut injecter un air plus chaud et/ou avec un débit plus important.

Toutefois, cette solution n'est pas satisfaisante car il est nécessaire de prévoir pour le cadre avant, l'entrée d'air et les éventuels revêtements de traitement acoustique des matériaux résistants à hautes températures. Cet aspect tend à réduire le choix des matériaux utilisables et impose généralement l'utilisation de matériaux lourds et relativement coûteux.

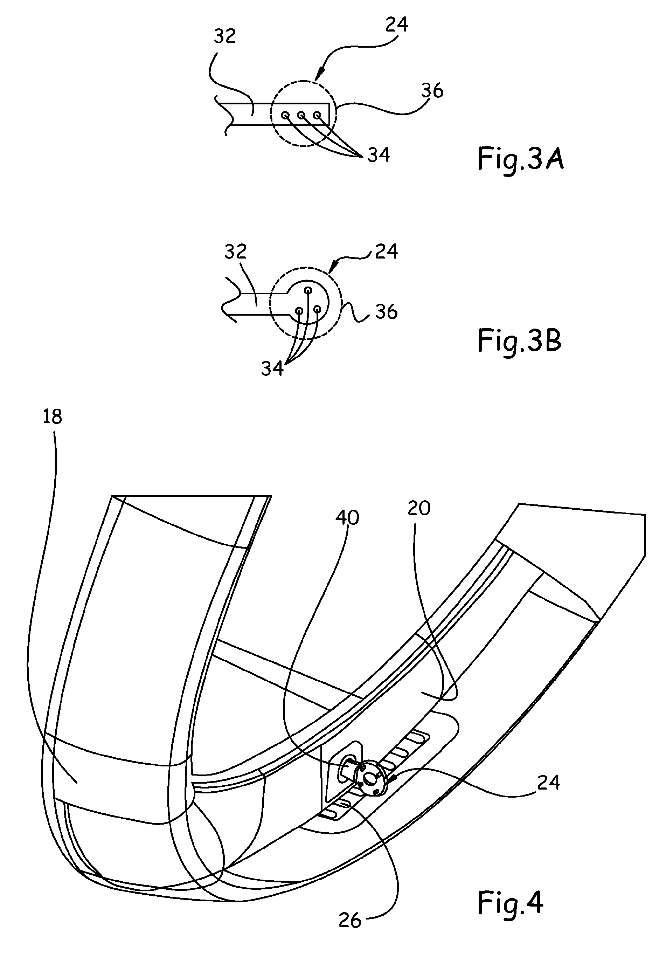

Comme illustré sur les figures 3A et 3B, les moyens 24 d'injection peuvent se présenter sous la forme d'un tube 32 perpendiculaire au cadre avant possédant un ou plusieurs orifices d'injection 34 orientés selon le sens de circulation de l'air circulant dans le conduit 22. Dans ce cas, les moyens d'injection génèrent, dans la veine d'air moins chaud circulant dans le conduit 22, une veine d'air chaud juste injecté dont la limite 36, matérialisée par les pointillés sur les figures 3A et 3B, constitue la surface d'échange entre ces deux veines d'air.

Pour améliorer les échanges, une solution peut consister à augmenter la surface d'échange en augmentant le nombres d'orifices d'injection 34. Toutefois dans ce cas, les moyens d'injection sont relativement encombrants et engendrent de fortes pertes de charge. De plus, augmenter le nombre d'orifices d'injection tout en conservant une vitesse d'injection suffisante dans le conduit impose d'augmenter le débit d'air chaud nécessaire ce qui conduit à augmenter l'énergie nécessaire pour sa production et donc la consommation de l'aéronef.

Selon un autre aspect, plus la différence de températures entre l'air chaud injecté et l'air moins chaud circulant dans le conduit est importante et moins ces deux veines d'air se mélangent si bien que la veine d'air chaud juste injecté tend à impacter la paroi du conduit avec une température très importante. Ainsi, on obtient deux veines, l'une avec une température nettement supérieure à la température nécessaire pour le traitement du givre et une seconde veine dont la température est insuffisante pour ledit traitement.

Pour limiter la température d'impact de la veine d'air chaud juste injecté, les documents FR-2.813.581 et US-6.443.395 proposent de placer après les moyens 24 d'injection un mélangeur comportant un tube en forme de tuyère qui mélange l'air chaud injecté avec l'air moins chaud déjà présent et circulant dans le conduit 22. Cette solution a pour avantage de réduire la valeur maximale de la température subie par la paroi du conduit 22 et permet en raison du mélange d'obtenir une veine d'air chaud avec une température suffisante pour le traitement du givre ayant un débit nettement supérieur à la veine d'air très chaud juste injecté de l'art antérieur sans mélangeur.

Toutefois, ce mélangeur ne donne pas pleinement satisfaction car il constitue une pièce supplémentaire en plus des moyens d'injection qui induit une masse embarquée supplémentaire et un entretien spécifique. Or, si les moyens d'injection sont accessibles en raison d'une trappe d'accès en partie basse de la nacelle, le mélangeur est décalé par rapport à ladite trappe si bien qu'il n'est pas facile de l'inspecter et il est souvent nécessaire de démonter l'entrée d'air en cas de panne ce qui impose une immobilisation conséquente de l'aéronef.

Un autre mode de réalisation est divulgué dans le document US2002/0148929.

Aussi, la présente invention vise à pallier aux inconvénients de l'art antérieur en proposant une entrée d'air d'une nacelle d'aéronef utilisant de l'air chaud pour le traitement du givre intégrant des moyens d'injection en air chaud optimisés.

A cet effet, l'invention a pour objet une entrée d'air d'une nacelle d'aéronef comprenant un conduit s'étendant sur la circonférence de ladite entrée d'air et des moyens d'injection en air chaud de manière localisée dans ledit conduit assurant la circulation de l'air chaud dans le conduit le long de sa circonférence, caractérisée en ce que les moyens d'injection comprennent une nourrice dans un plan sécant à la direction du flux d'air circulant dans le conduit comportant au moins un trou permettant au flux d'air circulant dans le conduit de la traverser et une pluralité d'orifices d'injection reliés à une alimentation en air chaud et disposés autour du trou de passage et/ou entre les trous de passage.

D'autres caractéristiques et avantages ressortiront de la description qui va suivre de l'invention, description donnée à titre d'exemple uniquement, en regard des dessins annexés sur lesquels :
- la figure 1 est une vue en perspective d'une nacelle d'aéronef,
- la figure 2 est une coupe selon un plan longitudinal de l'avant d'une nacelle,
- la figure 3A est une vue latérale illustrant des moyens d'injection d'air chaud selon un mode de réalisation de l'art antérieur,
- la figure 3B est une vue latérale illustrant des moyens d'injection d'air chaud selon un autre mode de réalisation de l'art antérieur,
- la figure 4 est une vue en perspective illustrant une partie d'une entrée d'air intégrant des moyens d'injection d'air chaud selon l'invention,
- la figure 5 est une vue en perspective des moyens d'injection selon l'invention,
- la figure 6 est une vue latérale des moyens d'injection selon l'invention,
- la figure 7 est une coupe selon la ligne VII-VII de la figure 6 des moyens d'injection d'air chaud selon l'invention, et
- la figure 8 est une coupe selon la ligne VIII-VIII de la figure 6 illustrant un orifice d'injection des moyens d'injection d'air chaud selon l'invention.

Sur la figure 2, on a représenté une entrée d'air 18 d'une nacelle d'aéronef. L'entrée d'air permet de canaliser vers la motorisation un flux d'air référencé par la flèche 38.

La partie frontale de l'entrée d'air décrit une forme sensiblement circulaire qui s'étend dans un plan qui peut être sensiblement perpendiculaire à l'axe longitudinal, ou non perpendiculaire, avec la partie frontale située à 12h légèrement avancée. Toutefois, d'autres formes d'entrée d'air peuvent être envisagées.

L'invention se rapporte plus particulièrement à une nacelle intégrant un traitement du givre consistant à utiliser de l'air chaud prélevé au niveau de la motorisation.

Selon un mode de réalisation, une nacelle comprend une cloison appelée cadre avant 20 qui délimite avec l'entrée d'air 18 un conduit 22 qui s'étend sur toute la circonférence de la nacelle et qui a une section en forme de D.

Selon un mode de réalisation, ce conduit 22 comprend des moyens 24 d'injection en air chaud de manière localisée.

En complément, le conduit 22 comprend un échappement 26, visible sur la figure 4.

Selon l'exemple illustré, les moyens 24 d'injection permettent de générer un flux dans le conduit 22 selon le sens horaire (comme illustré sur les figures) ou antihoraire.

Ces moyens d'injection 24 peuvent être disposés au niveau de la partie basse du conduit.

Les moyens 24 d'injection comprennent un tube 40 d'entrée de l'air chaud en saillie par rapport au cadre avant 20 et relié par tous moyens appropriés au cadre avant 20 (par exemple une collerette), dans le prolongement d'un orifice ménagé dans le cadre avant 20, une alimentation en air chaud débouchant au niveau dudit orifice à l'arrière du cadre avant. En variante, le tube 40 peut traverser le cadre avant 20 et être relié à une alimentation en air chaud. L'alimentation en air chaud n'est pas plus détaillée car elle est connue de l'homme du métier. De préférence, l'air chaud est prélevé au niveau de la motorisation et acheminé jusqu'à l'entrée d'air grâce à un ou plusieurs conduits.

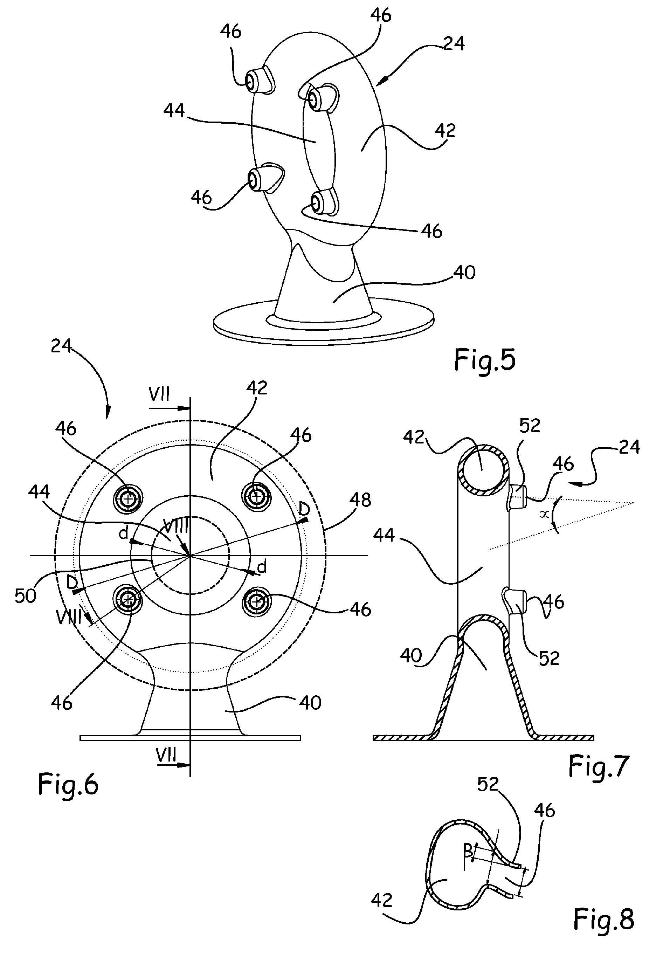

Selon l'invention illustrée plus en détails sur les figures 5 à 8, les moyens 24 d'injection d'air chaud comprennent d'une part un conduit annulaire 42 relié au tube 40, disposé dans un plan sécant à la direction de l'air circulant dans le conduit et placé dans le conduit 22 de manière sensiblement concentrique, ledit conduit annulaire définissant un trou 44 de passage pour l'air circulant dans le conduit, et d'autre part, plusieurs orifices d'injection 46 disposés en périphérie du conduit annulaire 42 et apte à injecter l'air chaud selon une direction approximativement confondue avec celle du flux d'air circulant dans le conduit 22.

Selon un mode de réalisation, le conduit annulaire 42 est disposé dans un plan sensiblement radial.

Par plan radial, on entend un plan contenant l'axe longitudinal 16 et une direction radiale.

Selon cette configuration, juste après l'injection de l'air chaud, on constate que la veine d'air chaud juste injecté est délimitée par une première ligne 48 dont le diamètre est supérieur ou égal au diamètre extérieur D du conduit annulaire 42 et par une seconde ligne 50 dont le diamètre est inférieur ou égal au diamètre intérieur d du conduit annulaire 42.

Ainsi, cette configuration permet d'augmenter sensiblement la surface d'échange entre la veine d'air chaud injecté et la veine d'air circulant dans le conduit 22 sans toutefois augmenter l'encombrement des moyens d'injection dans le conduit et donc les pertes de charge.

De manière générale, les moyens d'injection comprennent une nourrice dans un plan sécant à la direction du flux d'air circulant dans le conduit 22 comportant une pluralité de trous 44 permettant au flux d'air circulant dans le conduit de la traverser et une pluralité d'orifices d'injection 46 reliés à une alimentation en air chaud et disposés autour ou entre les trous de passage 44.

Ainsi, les trous de passage 44 permettent de ne pas trop augmenter les pertes de charge et de générer entre les veines d'air chaud injecté par les orifices d'injection 46 des veines d'air moins chaud circulant déjà dans le conduit ce qui permet d'augmenter la surface d'échange entre l'air chaud juste injecté et l'air chaud circulant déjà dans le conduit.

La variante présentée sur les figures 5 à 8 constitue une variante simplifiée comprenant un trou de passage qui permet d'optimiser la surface d'échange et les pertes de charges. De plus cette solution permet d'optimiser le nombre d'orifices afin de ne pas augmenter la consommation de l'aéronef.

Selon une autre caractéristique de l'invention, certains orifices d'injection 46 sont disposés de manière à injecter l'air chaud selon des directions convergentes comme illustré sur la figure 7.

Selon un mode de réalisation préféré, le conduit annulaire 42 comprend quatre orifices d'injection 46, répartis de manière régulière sur la périphérie du conduit annulaire, à 90°, prévus chacun à l'extrémité d'un conduit d'injection 52 de section sensiblement circulaire et de longueur de l'ordre de 20 mm.

Les conduits d'injection 52 sont orientés de manière à ce que les flux d'air chaud injectés soient convergents pour générer un flux perturbé et non laminaire qui favorise le mélange entre l'air chaud injecté et l'air circulant déjà dans le conduit.

Pour optimiser le mélange entre l'air chaud injecté et l'air circulant déjà dans le conduit, les axes des conduits d'injection 52 forment avec la direction du flux d'air circulant dans le conduit un angle α inférieur à 20°, et de préférence de l'ordre de 10 à 15 °.

Les conduits d'injection 52 peuvent être orientés de manière à ce que les flux d'air chaud injectés forment un flux ayant un mouvement hélicoïdal autour du ou des flux traversant les trous de passage 44.

Afin d'améliorer le mélange et la perturbation des flux, chaque conduit d'injection 52 a une section qui se réduit jusqu'à l'orifice d'injection pour augmenter la vitesse d'injection du flux d'air chaud. Ainsi, les conduits d'injection 52 ont une forme tronconique qui se réduit jusqu'à l'orifice d'injection 46 avec un angle β inférieur à 20° et de préférence de l'ordre de 5 à 10° comme illustré sur la figure 8.

Pour fixer un ordre de grandeur, la section du conduit annulaire est de l'ordre de 400 mm², le diamètre extérieur du conduit annulaire de l'ordre de 120 mm et le diamètre intérieur de l'ordre de 65 mm, les orifices d'injection 46 ayant un diamètre de l'ordre 13 mm.

## Revendications

1. Entrée d'air d'une nacelle d'aéronef comprenant un conduit s'étendant sur la circonférence de ladite entrée d'air et des moyens (24) d'injection en air chaud de manière localisée dans ledit conduit (22) assurant la circulation de l'air chaud dans le conduit le long de sa circonférence, **caractérisée en ce que** les moyens (24) d'injection comprennent une nourrice dans un plan sécant à la direction du flux d'air circulant dans le conduit (22) comportant au moins un trou (44) permettant au flux d'air circulant dans le conduit de la traverser et une pluralité d'orifices d'injection (46) reliés à une alimentation en air chaud et disposés autour du trou de passage ou autour et/ou entre les trous de passage (44).

2. Entrée d'air d'une nacelle d'aéronef selon la revendication 1, **caractérisée en ce que** les moyens d'injection (24) comprennent d'une part un conduit annulaire (42) relié à une alimentation en air chaud, disposé dans un plan sécant à la direction de l'air circulant dans le conduit, ledit conduit annulaire définissant un trou (44) de passage pour l'air circulant dans le conduit, et d'autre part, plusieurs orifices d'injection (46) disposés sur la périphérie du conduit annulaire (42).

3. Entrée d'air d'une nacelle d'aéronef selon la revendication 2, **caractérisée en ce que** le conduit annulaire (42) comprend des orifices d'injection (46), répartis de manière régulière sur la périphérie du conduit annulaire, prévus chacun à l'extrémité d'un conduit d'injection (52).

4. Entrée d'air d'une nacelle d'aéronef selon l'une quelconque des revendications précédentes, **caractérisée en ce que** certains orifices d'injection (46) sont disposés de manière à injecter l'air chaud selon des directions convergentes.

5. Entrée d'air d'une nacelle d'aéronef selon la revendication 4, **caractérisée en ce que** les moyens d'injection (24) comprennent d'une part un conduit annulaire (42) relié à une alimentation en air chaud, disposé dans un plan sécant à la direction de l'air circulant dans le conduit, ledit conduit annulaire définissant un trou (44) de passage pour l'air circulant dans le conduit, et d'autre part, plusieurs orifices d'injection (46) disposés sur la périphérie du conduit annulaire (42) prévus chacun à l'extrémité d'un conduit d'injection (52) orientés de manière à ce que les flux d'air chaud injectés soient convergents.

6. Entrée d'air d'une nacelle d'aéronef selon la revendication 5, **caractérisée en ce que** les axes des conduits d'injection (52) forment avec la direction du flux d'air circulant dans le conduit un angle (α) inférieur à 20°.

7. Entrée d'air d'une nacelle d'aéronef selon l'une quelconque des revendications précédentes, **caractérisée en ce que** certains orifices d'injection (46) sont disposés de manière à ce que les flux d'air chaud injectés forment un flux ayant un mouvement hélicoïdal autour du ou des flux traversant les trous de passage (44).

8. Entrée d'air d'une nacelle d'aéronef selon l'une quelconque des revendications précédentes, **caractérisée en ce que** les orifices d'injection (46) sont prévus chacun à l'extrémité d'un conduit d'injection (52) ayant une section qui se réduit jusqu'à l'orifice d'injection pour augmenter la vitesse d'injection du flux d'air chaud.

9. Entrée d'air d'une nacelle d'aéronef selon la revendication 8, **caractérisée en ce que** les conduits d'injection (52) ont une forme tronconique qui se réduit jusqu'à l'orifice d'injection (46) avec un angle (β) inférieur à 20°.

10. Nacelle d'aéronef intégrant une entrée d'air selon l'une quelconque des revendications précédentes.

## Patentansprüche

1. Lufteinlass einer Gondel eines Luftfahrzeugs mit einer sich um den Umfang des Lufteinlasses erstreckenden Leitung und mit Injektionsmitteln (24) für Warmluft, die in der Leitung (22) angeordnet sind und die Zirkulation der Warmluft in der Leitung entlang dessen Umfang gewährleisten, **dadurch gekennzeichnet, dass** die Injektionsmittel (24) in einer Ebene quer zur Strömungsrichtung der in der Leitung (22) zirkulierenden Luft eine Injektionseinheit aufweist, die über wenigstens ein Loch (44) verfügt, das es gestattet, dass die in der Leitung zirkulierende Warmluft durch dieses hindurchtritt, und eine Vielzahl von Injektionsöffnungen (46), die mit einer Warmluftzufuhr verbunden sind und um das Durchführungsloch oder um die Durchführungslöcher (44) herum und/oder zwischen den Durchführungslöchern (44) angeordnet sind.

2. Lufteinlass einer Gondel eines Luftfahrzeugs nach Anspruch 1, **dadurch gekennzeichnet, dass** die Injektionsmittel (24) einerseits eine ringförmige Leitung (42) aufweisen, die mit einer Warmluftzufuhr verbunden ist und die in einer Ebene quer zur Richtung der in der Leitung zirkulierenden Luft angeordnet ist, wobei die ringförmige Leitung ein Durchführungsloch (44) für die in der Leitung zirkulierende Luft bildet, und andererseits mehrere Injektionsöffnungen (46) aufweisen, die am Rand der ringförmigen Leitung (42) angeordnet sind.

3. Lufteinlass einer Gondel eines Luftfahrzeugs nach Anspruch 2, **dadurch gekennzeichnet, dass** die ringförmige Leitung (42) Injektionsöffnungen (46) aufweist, die regelmäßig über den Rand der ringförmigen Leitung verteilt sind und jeweils am Ende einer Injektionsleitung (52) vorgesehen sind.

4. Lufteinlass einer Gondel eines Luftfahrzeugs nach einem der vorhergehenden Ansprüche, **dadurch gekennzeichnet, dass** bestimmte Injektionsöffnungen (46) so angeordnet sind, dass die Warmluft in konvergente Richtungen injiziert wird.

5. Lufteinlass einer Gondel eines Luftfahrzeugs nach Anspruch 4, **dadurch gekennzeichnet, dass** die Injektionsmittel (24) einerseits eine ringförmige Leitung (42) aufweisen, die mit einer Warmluftzufuhr verbunden ist und die in eine Ebene quer zur Richtung der in der Leitung zirkulierenden Luft angeordnet ist, wobei die ringförmige Leitung ein Durchführungsloch (44) für die in der Leitung zirkulierende Luft bildet, und andererseits mehrere Injektionsöffnungen (46) aufweisen, die am Rand der ringförmigen Leitung (42) angeordnet sind, jeweils am Ende einer Injektionsleitung (52) vorgesehen sind und so ausgerichtet sind, dass die injizierten Warmluftströme konvergieren.

6. Lufteinlass einer Gondel eines Luftfahrzeugs nach Anspruch 5, **dadurch gekennzeichnet, dass** die Achsen der Injektionsleitungen (52) mit der Strömungsrichtung der in der Leitung zirkulierenden Luft einen Winkel (*α*) unterhalb von 20° bilden.

7. Lufteinlass einer Gondel eines Luftfahrzeugs nach einem der vorhergehenden Ansprüche, **dadurch gekennzeichnet, dass** bestimmte Injektionsöffnungen (46) so angeordnet sind, dass die injizierten Warmluftströme eine helixförmige Bewegung um den oder die durch die Durchführungslöcher (44) hindurchtretenden Strom oder Ströme ausführen.

8. Lufteinlass einer Gondel eines Luftfahrzeugs nach einem der vorhergehenden Ansprüche, **dadurch gekennzeichnet, dass** die Injektionsöffnungen (46) jeweils am Ende einer Injektionsleitung (52) vorgesehen sind, die einen Querschnitt aufweisen, der sich bis zur Injektionsöffnung verringert, um die Injektionsgeschwindigkeit des Warmluftstroms zu erhöhen.

9. Lufteinlass einer Gondel eines Luftfahrzeugs nach Anspruch 8, **dadurch gekennzeichnet, dass** die Injektionsleitungen (52) eine kegelstumpfförmige Form aufweisen, die sich bis zu den Injektionsöffnungen (46) mit einem Winkel (*β*) unterhalb von 20° verjüngert.

10. Gondel eines Luftfahrzeugs, die mit einem Lufteinlass nach einem der vorhergehenden Ansprüche ausgestattet ist.

## Claims

1. Air intake of an aircraft nacelle that comprises a pipe that extends over the circumference of said air intake and means (24) for localized injection of hot air in said pipe (22) providing the circulation of the hot air in the pipe along its circumference, **characterized in that** the injection means (24) comprise a collector tank in a plane that is secant to the direction of the flow of air that circulates in the pipe (22) that comprises at least one hole (44) that makes it possible for the flow of air that circulates in the pipe to pass through it and a number of injection openings (46) that are connected to a supply of hot air and arranged around the passage hole or around and/or between the passage holes (44).

2. Air intake of an aircraft nacelle according to Claim 1, wherein the injection means (24) comprise, on the one hand, an annular pipe (42) that is connected to a hot air supply, arranged in a plane that is secant to the direction of the air that circulates in the pipe, whereby said annular pipe defines a passage hole (44) for the air that circulates in the pipe, and, on the other hand, several injection openings (46) that are arranged on the periphery of the annular pipe (42).

3. Air intake of an aircraft nacelle according to Claim 2, wherein the annular pipe (42) comprises injection openings (46), distributed uniformly over the periphery of the annular pipe, each provided at the end of an injection pipe (52).

4. Air intake of an aircraft nacelle according to any of the preceding claims, wherein certain injection openings (46) are arranged in such a way as to inject hot air in convergent directions.

5. Air intake of an aircraft nacelle according to Claim 4, wherein the injection means (24) comprise, on the one hand, an annular pipe (42) that is connected to a hot air supply, arranged in a plane that is secant to the direction of the air that circulates in the pipe, whereby said annular pipe defines a passage hole (44) for the air that circulates in the pipe, and, on the other hand, several injection openings (46) that are arranged on the periphery of the annular pipe (42), each provided at the end of an injection pipe (52) and oriented in such a way that the injected hot air flows are convergent.

6. Air intake of an aircraft nacelle according to Claim 5, wherein the axes of the injection pipes (52) form an angle (α) of less than 20° with the direction of the air flow that circulates in the pipe.

7. Air intake of an aircraft nacelle according to any of the preceding claims, wherein certain injection openings (46) are arranged in such a way that the injected hot air flows form a flow that has a helical movement around the flow(s) that pass through the passage holes (44).

8. Air intake of an aircraft nacelle according to any of the preceding claims, wherein the injection openings (46) are each provided at the end of an injection pipe (52) that has a cross-section that diminishes up to the injection openings for increasing the injection rate of the hot air flow.

9. Air intake of an aircraft nacelle according to Claim 8, wherein the injection pipes (52) have a tapered shape that diminishes up to the injection opening (46) with an angle (β) of less than 20°.

10. Aircraft nacelle that integrates an air intake according to any of the preceding claims.
